**Europäisches Patentamt**

**European Patent Office**

**Office européen des brevets**

(19)

(11) Publication number : **0 226 585**
**B1**

(12) **EUROPEAN PATENT SPECIFICATION**

(45) Date of publication of patent specification :
14.02.90

(21) Application number : 85904404.2

(22) Date of filing : 03.09.85

(86) International application number :
PCT/AU 85/00211

(87) International publication number :
WO/8601368 (13.03.86 Gazette 86/06)

(51) Int. Cl.⁵ : **A 01 B 39/08**, A 01 B 39/16,
A 01 B 39/18, A 01 B 35/16,
A 01 B 33/06

(54) **CULTIVATING APPARATUS.**

(30) Priority : 03.09.84 AU 6900/84

(43) Date of publication of application :
01.07.87 Bulletin 87/27

(45) Publication of the grant of the patent :
14.02.90 Bulletin 90/07

(84) Designated contracting states :
AT CH DE FR IT LI NL

(56) References cited :
AU--A-- 438 226
AU--B-- 23 151
AU--B-- 149 371
AU--B-- 285 895
AU--B-- 757 452
AU--B-- 2 065 356
AU--B-- 2 178 456
AU--B-- 3 200 050
DE--C-- 1 190 715
FR--E-- 80 473
GB--A-- 2 081 563
SU--A-- 138 415
US--A-- 1 365 037
US--A-- 2 225 516
US--A-- 2 851 842

(73) Proprietor : COLLARD Michel
Ets COLLARD CMV BP 1 Bouzy
F-51150 Tours sur Marne (FR)

(72) Inventor : MACRI, Vincenzo
Block 411
Mourquoung, NSW 2648 (AU)

(74) Representative : Gérardin, Robert Jean René
PROT'INNOV INTERNATIONAL SA Résidence de
l'Observatoire avenue Georges Clémenceau Boîte
Postale 2764
F-51066 Reims Cedex (FR)

## Description

L'invention concerne essentiellement les appareils pour préparation du sol, binage, sarclage ou autres travaux agraires et 'tout particulièrement un appareil mobile conçu pour être porté ou remorqué par un véhicule tel qu'un tracteur ou équivalent.

L'appareil est particulièrement approprié à être utilisé sur des surfaces difficiles d'accès par les cultivateurs ou les sarcleurs ; par exemple dans les vergers, les jardinières ou les vignes, où les arbres, les plants, ou équivalents, sont généralement disposés en rangs et où les arbres ou les plants de chaque rang ont poussé ensemble de façon très serrée. Dans certains cas, il est difficile de cultiver la terre entre les plants contigus de chaque rang.

On connait déjà des appareils de cette sorte comportant un outil aratoire tournant monté sur un véhicule, tel qu'un tracteur, au moyen d'un bras extensible et rétractible par rapport au véhicule, de façon que l'outil aratoire puisse se mouvoir entre les plants pendant que le tracteur se déplace en ligne droite entre les rangs. Les outils aratoires de ces appareils comprenant généralement un organe principal, mû par la prise de force, comportant un certain nombre de parties saillantes, situées sur la face opposée au sol et dirigée vers celui-ci.

En utilisation, l'outil est entraîné en rotation par l'intermédiaire d'un arbre disposé verticalement par rapport au terrain à cultiver et les parties travaillantes ou autres parties saillantes sont disposées de façon à ameublir le sol.

On connaît par exemple un outil utilisé pour la culture de la terre ou pour tondre ou couper des cannes, correspondant au préambule de la revendication 1 (brevet Australien AU-B-149.371). Cet outil est constitué principalement d'une structure adaptée pour être fixée à la barre d'attelage d'un tracteur, ladite structure pouvant s'élever et d'un disque entraîné en rotation pouvant être positionné soit à la surface du sol, soit de manière à pouvoir pénétrer le sol ; cette dernière application nécessitant une légère adaptation, consistant à disposer des parties en saillies sur la partie supérieure du disque.

Parmi les problèmes rencontrés avec les appareils connus, figure celui du dérangement du système radiculaire de la vigne ou des plants par les parties travaillantes ou saillantes ; particulièrement dans le cas de la vigne où elles ont tendance à accrocher le pied et les racines et à arracher ceux-ci. Un autre problème consiste en ce que, sur certains sols (contenant par exemple beaucoup d'argile) les parties travaillantes tendent à bourrer rapidement. Ceci peut aussi se produire avec certaines sortes d'herbe telle que du « paspalin », du « johnson grass » ou des cannes, à plus forte raison lorsque de longues herbes sont rencontrées, car l'enroulement des herbes autour de l'outil pose un problème.

Il existe aussi des problèmes, avec des appareils connus, pour le réglage de la profondeur ou de la position de la tête de travail lorsqu'on n'est pas en mesure de voir la surface travaillée.

La présente invention a donc pour objet de réaliser un appareil perfectionné qui atténue un ou plusieurs des inconvénients susmentionnés.

Selon un mode de réalisation de la présente invention, l'appareil de sarclage ou de travail du sol comprenant un corps principal, un arbre d'entraînement tournant supporté par ledit corps principal, un support arrangé pour supporter ledit corps sur un véhicule porteur, une tête de travail efficacement reliée audit arbre d'entraînement pour tourner autour d'un axe qui, en utilisation, est approximativement normal au terrain à travailler, ladite tête de travail comprenant un élément en forme de disque comportant un rebord effilé à sa périphérie, une partie supérieure bombée et une base substantiellement plate qui est, en utilisation, dirigée vers le sol, est caractérisé de manière générale en ce que le corps principal est adapté pour être animé d'un mouvement relatif en éloignement et en rapprochement par rapport au véhicule porteur, en ce qu'il comporte des bras de contrôle solidaires en rotation de l'arbre d'entraînement, lesdits bras de contrôle étant adaptés pour projeter les matières coupées par la tête de travail à l'extérieur de celle-ci et en ce qu'il comporte un protecteur conçu pour empêcher tout contact de la tête de travail avec les arbres ou la vigne quand l'appareil est en service.

La tête de travail peut être abaissée ou relevée par rapport au véhicule porteur.

De plus, il comporte des moyens de liaison transmettant un mouvement audit corps principal par rapport au véhicule, en éloignement et en rapprochement par rapport à celui-ci.

Selon un mode particulier de réalisation, ledit corps principal comporte, en outre, une partie tubulaire munie à chaque extrémité de roulements supportant et permettant la rotation de l'arbre d'entraînement, ce dernier étant mû par des moyens supportés par le corps principal constitués d'un moteur hydraulique efficacement relié à l'arbre d'entraînement.

Les bras de contrôle sont conçus pour que, lorsque la tête de travail tourne dans un sens, les matières soient projetées de ladite tête de travail dans l'autre sens, de façon que les matières retournent sur la surface qui vient d'être travaillée.

Le protecteur est constitué d'un anneau monté libre en rotation sur le corps principal ou l'arbre d'entraînement.

Le diamètre de l'anneau est supérieur à celui de la tête de travail.

Un mode de réalisation préféré de l'invention est décrit ci-dessous avec référence aux dessins d'accompagnement sur lesquels :

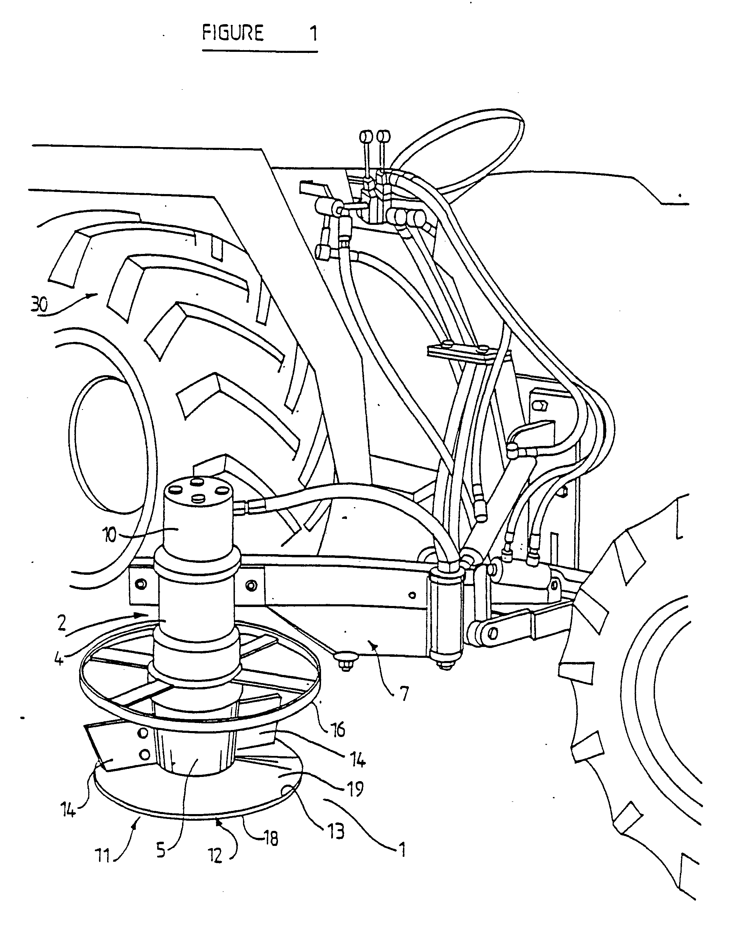

La figure 1 représente une vue schématique de l'appareil, selon la présente invention, monté sur un véhicule.

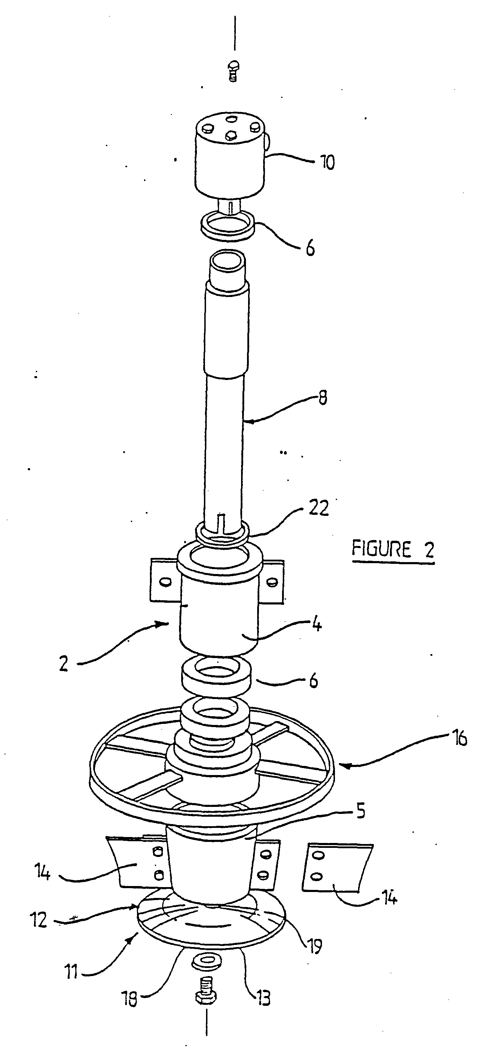

La figure 2 représente une vue éclatée montrant les parties distinctives de l'appareil selon l'invention.

En se reportant aux dessins, l'appareil comportant la référence générale 1, comprend une tête de travail ou de culture 11 qui est efficacement fixée à un arbre d'entraînement 8 conçu pour que, en position normale d'utilisation, l'arbre se prolonge généralement en direction de la terre à cultiver, à sarcler ou à ameublir. La tête du travail ou de culture 11 est fixée perpendiculairement à la partie extrême de l'arbre 8, de façon à entrer en contact avec le sol ou à être mise en position adjacente par rapport à celui-ci.

La tête de travail 11 et l'arbre 8 de l'appareil sont déterminés pour faire partie d'un véhicule tel qu'un tracteur 30 ou pour être supportés par celui-ci, et conçus pour être mis en mouvement relatif par rapport au véhicule, en rapprochement et en éloignement par rapport à celui-ci. Il est aussi souhaitable que la tête de travail puisse être abaissée ou relevée par rapport au véhicule.

Sous la forme représentée, l'appareil 1 comprend un corps principal 2 efficacement supporté par le tracteur 30 ; la fixation du corps 2 au véhicule peut être obtenue par l'intermédiaire d'un support 7 permettant un mouvement relatif du corps par rapport au véhicule, en éloignement et en rapprochement par rapport à celui-ci. Ce support 7 peut être constitué d'un parallélogramme articulé tel que celui décrit dans le brevet Australien n° 285 895 bien que d'autres types de supports puissent être utilisés.

Le corps principal 2 peut comprendre une première partie tubulaire 4 équipé d'un roulement 6 à chaque extrémité, assurant le support et permettant la rotation de l'arbre 8 et une seconde partie tubulaire 5. Les roulements supérieur et inférieur 6 sont montés en appui contre deux épaulements situés à la partie supérieure de l'arbre d'entraînement, le roulement inférieur étant retenu par un jonc d'arrêt 22. De préférence, comme on le voit, le moyen d'entraînement est aussi supporté par le corps principal et ce moyen d'entraînement peut prendre la forme d'un moteur hydraulique 10 fixé sur le corps par des boulons (non représentés) efficacement raccordé à l'arbre d'entraînement 8, par exemple par clavetage (non représenté). Le moteur hydraulique 10 peut être raccordé à une source d'énergie montée sur le tracteur ou autre part.

Selon un mode de réalisation préférentiel, l'arbre 8 a son axe longitudinal disposé sensiblement verticalement quand l'appareil est en position normale de travail. La tête de travail 11, qui peut prendre la forme d'un disque 12, comporte une partie travaillante ou un rebord tranchant 13 sur toute sa périphérie. L'élément en forme de disque est, en utilisation efficacement fixé à l'extrémité d'un arbre d'entraînement, tel que, par exemple, celui décrit ci-dessus, lequel élément en forme de disque est, en utilisation, adjacent au sol à cultiver, sarcler ou autres. Selon le mode de réalisation représenté, l'élément en forme de disque 12 comporte une face inférieure plate 18, qui est située à proximité immédiate du sol à cultiver, sarcler ou autres, en position d'utilisation et une face supérieure sensiblement conique 19 entre la face inférieure et l'extrémité de l'arbre d'entraînement.

Le disque est, de préférence, monté de façon que, en utilisation, sa face inférieure soit maintenue approximativement parallèle au plan général du terrain à cultiver, sarcler ou autres. Des bras de contrôle 14 sont efficacement montés solidaires en rotation sur l'arbre d'entraînement ou la tête de travail ; ces bras de contrôle étant conçus pour projeter les matières coupées par la tête de travail à l'extérieur de celle-ci. De préférence, comme cela est représenté, les bras de contrôle 14 sont supportés par une partie tubulaire inférieure 5 du corps et sont conçus, ou déterminés, de façon que, lorsque la rotation s'effectue dans un sens, les matières soient éjectées dans l'autre sens de façon que celles-ci fassent retour sur la partie qui vient d'être travaillée. Selon un mode de réalisation, les bras de contrôle sont en forme de lames courbes disposées radialement vers l'extérieur, à partir de l'axe longitudinal central de l'arbre d'entraînement. Comme représentées, les lames sont sensiblement plates. Selon un mode de réalisation deux paires de lames peuvent être montées ; ces paires de lames étant disposées et espacées séparément dans la direction longitudinale de l'arbre d'entraînement.

La tête de travail peut être disposée relativement au sol travaillé ; de façon à permettre la réalisation de différents types d'opérations. Par exemple, elle peut être disposée juste au dessus du sol de façon qu'elle coupe et élimine les matières situées à la surface du sol. Alternativement, elle peut être disposée contre la surface de façon à ce qu'elle tende à arracher les racines des mauvaises herbes. Dans une autre position de travail, elle peut être disposée juste en dessous de la surface du sol, de façon à éliminer les grandes racines. Elle peut être aussi disposée plus profondément pour obtenir le travail ou l'ameublissement du sol.

L'appareil selon la présente invention, en outre, comprend un dispositif protecteur 16 conçu pour empêcher tout contact entre la tête de travail et les troncs des arbres ou les pieds de vigne lorsque l'appareil est en service. De préférence, comme représenté, le protecteur a la forme d'un anneau lequel est monté libre en rotation sur le corps principal ou l'arbre d'entraînement de l'appareil.

Selon un mode de réalisation, le protecteur est monté en roue libre sur un roulement fixé sur l'arbre d'entraînement et maintenu en place par un jonc d'arrêt. Comme représenté, l'anneau comporte un cercle extérieur relié à un moyeu par une série de rayons. De préférence, le protecteur est dimensionné pour qu'il ait un diamètre supérieur à celui de la tête de travail, de façon que, en fonctionnement, l'anneau tende à tourner autour du cep ou du tronc quand vient à leur contact, empêchant ainsi la tête de travail de heurter les plants.

Selon un mode de réalisation préférentiel, l'appareil peut comprendre des capteurs permettant de détecter quand le protecteur entre en contact avec un plant, lesquels, de cette façon, actionnent les moyens de liaison, afin d'entraîner la tête de travail à l'écart du plant.

Il serait valorisant que l'appareil selon l'invention puisse comporter plus d'une tête de travail, lesquelles seraient, par exemple, montées sur une traverse pour être utilisées selon la manière décrite ci-dessus. Selon un mode de réalisation particulier ou une série de têtes de travail est utilisée, il serait souhaitable que seulement le plus externe d'entre eux soit adapté pour se rapprocher ou s'éloigner du véhicule.

Ayant décrits les principaux composants d'un mode de réalisation particulier de l'appareil, une description des opérations et d'une forme particulière de réalisation sont maintenant données.

Dans ce mode particulier de réalisation, l'appareil est décrit en faisant référence au coupleur correspondant à celui décrit dans le brevet Australien n° 285 895.

L'appareil étant monté sur un tracteur, le moteur hydraulique d'entraînement est mis en œuvre pour assurer la rotation de l'arbre d'entraînement de la tête de travail et des bras de contrôle. La tête de travail en forme de disque est positionnée juste en dessous de la surface du sol où elle coupe les racines des mauvaises herbes et déverse celles-ci à distance des plants. Par contre-rotation, les bras de contrôle retournent la terre sous les plants.

Au fur et à mesure du déplacement du tracteur, le long des rangs de plants adjacents, le conducteur utilise les moyens de couplage pour positionner la tête de travail entre les plants adjacents des rangées. Lorsque le protecteur vient en contact avec un plant, il tend à rouler autour de celui-ci sans lui provoquer de dommage.

On appréciera que l'appareil selon la présente invention, dans ses modes de réalisation préférentiels, offre de nombreux avantages par rapport aux moyens connus. Par exemple, compte-tenu de la constitution de la tête de travail, il ne tend pas à perturber le système radiculaire de la vigne ou autres plants au cours du sarclage.

En outre, compte-tenu qu'il ne comporte pas de lames aratoires ou d'outils tournants saillants (contrairement aux sarcleurs rotatifs connus, qui ont une certaine tendance à accrocher les pieds de vigne ou leur système radiculaire), l'appareil peut être utilisé dans des conditions extrêmes telles que sur des couches de gazon, de « paspalin », de « johnson grass » ou de cannes sans bourrage, ni encrassement. En outre, l'opérateur peut régler la profondeur avec précision, lorsqu'un terrain relativement plat le permet. S'il le désire ; l'opérateur, peut extraire une rangée de mauvaises herbes lors d'un premier passage effectué à vitesse relativement élevée. L'appareil, compte-tenu de sa construction, est aussi capable de travailler dans des sols de composition assez exigeante. Les conditions humides et les sols argileux ne posent pas de problème à l'appareil, contrairement aux autres sarcleurs rotatifs qui sont connus pour s'encrasser dans de telles conditions. Etant capable d'être réglé en puissance, l'appareil peut travailler en terrains durs ou dans des conditions de travail les plus douces, en contournement, sur surfaces plates ou irrégulières, avec facilité. L'appareil est adaptable et peut fonctionner en effleurant juste la surface du sol ou peut être enfoncé à une profondeur déterminée permettant d'obtenir ainsi un sillon ininterrompu, pour ceux qui veulent irriguer sous les plantes. En outre, la limitation des lames et des parties tournantes limite la maintenance. La tête de travail peut être remplacée très rapidement. Aussi, le fait que l'appareil ne comporte pas de lame ou de turbine réhausse la sécurité offerte par l'appareil.

D'autres avantages découlent des bras de contrôle ; par exemple, le fait qu'ils soient montés sur une partie tubulaire d'assez grand diamètre, contribue à prévenir l'enroulement des mauvaises herbes autour du moyeu. Les bras de contrôle sont tels que, par renversement du sens de rotation du moteur hydraulique, ils soient capables de projeter les détritus sous les plants pour constituer un talus. Pour cette utilisation, l'appareil tend à donner de meilleurs résultats avec quatre bras plutôt qu'avec deux.

## Revendications

1. Appareil de sarclage ou de travail du sol comprenant un corps principal (2), un arbre d'entraînement tournant (8) supporté par ledit corps principal (2), un support (7) arrangé pour supporter ledit corps (2) sur un véhicule porteur (30), une tête de travail (11) efficacement reliée audit arbre d'entraînement (8) pour tourner autour d'un axe qui, en utilisation, est approximativement normal au terrain à travailler, ladite tête de travail (11) comprenant un élément en forme de disque (12) comportant un rebord effilé (13) à sa périphérie, une partie supérieure bombée (19) et une base substantiellement plate (18) qui est, en utilisation, dirigée vers le sol, caractérisé en ce que le corps principal (2) est adapté pour être animé d'un mouvement relatif en éloignement et en rapprochement par rapport au véhicule porteur, en ce qu'il comporte des bras de contrôle (14) solidaires en rotation de l'arbre d'entraînement (8), lesdits bras de contrôle étant adaptés pour projeter les matières coupées par la tête de travail à l'extérieur de celle-ci et en ce qu'il comporte un protecteur (16) conçu pour empêcher tout contact de la tête de travail avec les arbres ou la vigne quand l'appareil est en service.

2. Appareil selon la revendication 1, caractérisé en ce que la tête de travail (11) peut être abaissée ou relevée par rapport au véhicule porteur.

3. Appareil selon les revendications 1 ou 2, caractérisé en ce qu'il comporte des moyens de liaison transmettant un mouvement audit corps principal (2) par rapport au véhicule, en éloignement et en rapprochement par rapport à celui-ci.

4. Appareil selon les revendications 1 et 3, caractérisé en ce que ledit corps principal (2) comporte une partie tubulaire (4, 5) munie à chaque extrémité de roulements (6) supportant et permettant la rotation de l'arbre d'entraînement (8) ce dernier étant mû par des moyens supportés par le corps principal (2) constitués d'un moteur hydraulique (10) efficacement relié à l'arbre d'entraînement (8).

5. Appareil selon la revendication 1, caractérisé en ce que les bras de contrôle (14) sont conçus pour que, lorsque la tête de travail (11) tourne dans un sens, les matières soient projetées de ladite tête de travail (11) dans l'autre sens, de façon que les matières retournent sur la surface qui vient d'être travaillée.

6. Appareil selon la revendication 1, caractérisé en ce que le protecteur est constitué d'un anneau (16) monté libre en rotation sur le corps principal (2) ou l'arbre d'entraînement (8).

7. Appareil selon la revendication 6, caractérisé en ce que le diamètre de l'anneau (16) est supérieur à celui de la tête de travail (11).

## Claims

1. Weeding or cultivating apparatus comprising a main housing (2), a rotatable drive shaft (8) supported by said main housing (2), a coupling (7) arranged for supporting the said housing (2) on a mobile vehicle (30), a work head (11) operatively connected to said drive shaft (8) for rotation about an axis which, in use, is substantially normal to the ground to be worked, said work head (11) comprising a disc-like element (12) having a material working edge (13) around its periphery, a domed upper portion (19) and a substantially flat underside base surface (18) which, in use, faces towards the ground, wherein the main housing (2) is adapted to be mounted for movement relative to the vehicle towards an away therefrom, wherein it includes control member (14) in rotation therewith drive shaft (8) the said control members being adapted to throw material cut by the work head outwardly therefrom and wherein it includes a guard member (16) which is adapted to inhibit contact of the work head with trees or vines when the apparatus is being used.

2. Apparatus according to claim 1 wherein said work head (11) can be raised or lowered relative to the mobile vehicle.

3. Apparatus according to claim 1 or 2 wherein it includes coupling means for enabling movement of said main housing (2) relative to the vehicle toward an away therefrom.

4. Apparatus according to claims 1 and 3, wherein said main housing (2) comprises a tubular body (4, 5) having bearings (6) at each end thereof for rotatably supporting the drive shaft (8), there further being drive means supported by the main housing in the form of an hydraulic motor (10) operatively connected to the drive shaft (8).

5. Apparatus according to claim 1, wherein control members (14) are shaped so that for work head (11) rotation in one direction material is thrown away from said work head (11) in the other direction causes material to be returned to the area being worked.

6. Apparatus according to claim 1, wherein guard member being in the form of a ring (16) is mounted for free rotation on the main housing (2) or drive shaft (8).

7. Apparatus according to claim 6, wherein the ring (16) is of greater dimension than said work head (11).

## Patentansprüche

1. Gerät zum Jäten oder zur Bodenbearbeitung, aufweisend einen Hauptkörper (2), eine durch den Hauptkörper (2) getragene, sich drehende Mitnahmewelle (8), einen Träger (7), der zum Haltern des Körpers (2) an einem Trägerfahrzeug angeordnet ist, einen Arbeitskopf (11), der wirksam mit der Mitnahmewelle (8) zum Drehen um eine Achse verbunden ist, die bei Gebrauch etwa senkrecht zu dem zu bearbeitenden Grund ist, wobei der Arbeitskopf (11) ein Element in Scheibenform (12) aufweist, das an seiner Peripherie einen dünner werdenden Rand (13), einen gewölbten oberen Teil (19) und eine im wesentlichen flache Basis (18) umfaßt, die bei Gebrauch zum Boden hin gerichtet ist, dadurch gekennzeichnet, daß der Hauptkörper (2) geeignet ist, durch eine Relativbewegung bei Entfernung und bei Annäherung in bezug auf das Trägerfahrzeug erregt zu werden, daß er in Rotation fest mit der Mitnahmewelle (8) verbundene Kontrollarme (14) umfaßt, wobei die Kontrollarme geeignet sind, durch den Arbeitskopf geschnittene Materialien außerhalb von diesem herauszuschleudern und daß er einen Schutz (16) umfaßt, der gestaltet ist, um jeden Kontakt des Arbeitskopfes mit den Bäumen oder dem Weinstock zu verhindern, wenn sich das Gerät in Betrieb befindet.

2. Gerät nach Anspruch 1, dadurch gekennzeichnet, daß der Arbeitskopf (11) in bezug auf das Trägerfahrzeug abgesenkt oder angehoben werden kann.

3. Gerät nach den Ansprüchen 1 oder 2, dadurch gekennzeichnet, daß es Verbindungsmittel umfaßt, die auf den Hauptkörper (2) in bezug auf dieses eine Bewegung übertragen.

4. Gerät nach den Ansprüchen 1 und 3, dadurch gekennzeichnet, daß der Hauptkörper (2) einen Rohrteil (4, 5) umfaßt, der an jedem Ende mit Rollen (6) versehen ist, die die Drehung der Mitnahmewelle (8) unterstützen und gestatten, wobei diese letztere durch von dem Hauptkörper (2) gehalterte Mittel bewegt ist, die durch einen wirksam mit der Mitnahmewelle (8) verbundenen Hydromotor (10) gebildet sind.

5. Gerät nach Anspruch 1, dadurch gekennzeichnet, daß die Kontrollarme (14) gestaltet sind, damit sie, wenn sich der Arbeitskopf (11) in einer Richtung dreht, die Materialien vom Arbeitskopf (11) in der anderen Richtung herausgeschleudert werden derart, daß die Materialien auf die Oberfläche zurückkehren, die bearbeitet worden ist.

6. Gerät nach Anspruch 1, dadurch gekennzeichnet, daß der Schutz durch einen Ring (16) gebildet ist, der in Rotation frei auf dem Hauptkörper (2) oder der Mitnahmewelle (8) angebracht ist.

7. Gerät nach Anspruch 6, dadurch gekennzeichnet, daß der Durchmesser des Rings (16) größer als derjenige des Arbeitskopfes (11) ist.

FIGURE 1

FIGURE 2